# EUROPEAN PATENT APPLICATION

(11) **EP 1 452 782 A2**
(43) Date of publication of application: **01.09.2004**
(21) Application number: 04075192.7
(22) Date of filing: 22.01.2004
(51) Int. Cl.: F16H 61/22, F16H 59/02

(54) **Shifter assembly for an automatic transmission**

(30) Priority: 28.02.2003 US 376713
(71) Applicant: Teleflex Incorporated, Plymouth Meeting, PA 19462 (US)
(72) Inventor: Koontz, Edwart, Troy Michigan 48085 (US)
(74) Representative: Wharton, Peter Robert

(57) **Abstract**

A shifter assembly (20) having a base (22) and a transmission control member (30). A shift lever (36) is pivotally connected to the base (22) for movement within a first path (38) and a second path (40). The shift lever (36) is coupled to the control member (30) when the shift lever (36) moves within the first path (38) and is uncoupled from the control member (30) when the shift lever (36) moves within the second path (40). The shifter assembly (20) is characterized by a locking device (80) mounted to the base (22) for selectively engaging the control member (30). The locking device 80 remains stationary during the concurrent movement of the control member (30) and the shift lever (36) and moves into engagement with the control member (30) to couple the control member (30) to the base (22) when the shift lever (36) is in the second path (40). The locking device (80) prevents relative movement of the control member (30) and inadvertent shifting of a vehicle transmission as the shift lever (36) moves within the second path (40).

## Description

### BACKGROUND OF THE INVENTION

### 1. Field of the Invention

The subject invention relates to a shifter assembly for an automatic transmission having both automatic and manual shift modes.

### 2. Description of the Prior Art

Shifter assemblies for automatic transmissions having both automatic and manual shift modes are well known in the art. Typically, these shifter assemblies include a shift lever which moves within a first path for operating the transmission in the automatic shift mode. The automatic shift mode includes park, reverse, neutral, and drive positions for the shift lever. As the shift lever moves through the various positions, a control member mechanically actuates a linkage which in turn shifts the transmission. In addition, when the shift lever is in the drive position of the first path, the shift lever can pivot sideways into the second path. The shift lever can then move within the parallel second path for operating the transmission in the manual shift mode. In particular, the manual shift mode allows the shift lever to pivot upward and downward in the second path for upshifting and downshifting, respectively, the transmission while the transmission is in the drive position. The upshifting and downshifting is performed electronically through the use of switches and a controller. These types of shifter assemblies are known in the art as Tip-Tronic shifters and are exemplified in U.S. Patent Nos. 5,044,220; 5,791,197; 5,899,115; 6,230,579; and 6,295,886.

During the operation in the manual shift mode, it is important that the transmission remain in the drive position. In other words, it is desirable to prevent the transmission from shifting into neutral, reverse, or park while the shift lever is in the second path. One contemplated means for ensuring that the transmission remain in the drive position is to prevent movement of the control member when the shift lever is in the second path. U.S. Patent No. 5,044,220 discloses a pivoting locking device that moves into blocking engagement with the control member when the shift lever is in the second path. The locking device disclosed in the '220 patent, however, has a number of deficiencies. Some of the deficiencies include a relatively complicated operation, difficult packaging into most shifter assemblies, and precise machining of parts to ensure proper engagement.

Accordingly, it would be desirable to develop a locking device for a shifter assembly that could prevent movement of a control member when a shift lever is in a second path while overcoming the deficiencies of the prior art systems.

### SUMMARY OF THE INVENTION AND ADVANTAGES

A shifter assembly for shifting a vehicle transmission. The assembly comprises a base and a transmission control member movably connected to the base. The control member is adapted for connection to a linkage for operating the vehicle transmission. A shift lever is pivotally connected to the base for movement within a first path and a second path. The shift lever is coupled to the control member for concurrent movement therewith when the shift lever moves within the first path. The shift lever is uncoupled from the control member for independent movement relative to the control member when the shift lever moves within the second path. The shifter assembly is characterized by a locking device mounted to the base for selectively engaging the control member. The locking device remains stationary during the concurrent movement of the control member and the shift lever and moves into engagement with the control member to couple the control member to the base when the shift lever is in the second path. The locking device therefore prevents relative movement of the control member and inadvertent shifting of the vehicle transmission as the shift lever moves within the second path.

The shifter assembly of the subject invention therefore includes a simplified locking device that prevents movement of a control member when a shift lever is in a second path. The locking device does not suffer from the deficiencies of the prior art systems mentioned above.

### BRIEF DESCRIPTION OF THE DRAWINGS

Other advantages of the present invention will be readily appreciated as the same becomes better understood by reference to the following detailed description when considered in connection with the accompanying drawings wherein:

Figure 1 is a perspective view of a shifter assembly in accordance with the subject invention;

Figure 2 is another perspective view of the shifter assembly;

Figure 3 is a perspective view similar to Figure 2 with a cover removed therefrom;

Figure 4 is a perspective view of a shift lever coupled to a control member with a lockout mechanism;

Figure 5 is a side view of the lockout mechanism in a locked position with the shift lever in a park position;

Figure 6 is a side view of the lockout mechanism in an unlocked position with the shift lever in the park position;

Figure 7 is a side view of the lockout mechanism in the unlocked position with the shift lever in a drive position;

Figure 8 is a perspective view of the shift lever coupled to the control member;

Figure 9 is an exploded perspective view of Figure 8;

Figure 10 is another perspective view of the shift lever coupled to the control member;

Figure 11 is a perspective view of the shifter lever;

Figure 12 is another perspective view of the shifter lever;

Figure 13 is an exploded perspective view of a pivot mechanism;

Figure 14 is a fragmentary perspective view of the shifter assembly with the shift lever disposed in a first path and in a park position;

Figure 15 is a fragmentary perspective view of the shifter assembly with the shift lever disposed in the first path and in a drive position;

Figure 16 is another fragmentary perspective view of the shifter assembly with the shift lever disposed in the first path and in the drive position;

Figure 17 is a fragmentary perspective view of the shifter assembly with the shift lever pivoted into a second path with a locking device immobilizing the control member; and

Figure 18 is another fragmentary perspective view of the shifter assembly with the shift lever pivoted into the second path with the locking device immobilizing the control member.

### DETAILED DESCRIPTION OF THE PREFERRED EMBODIMENT

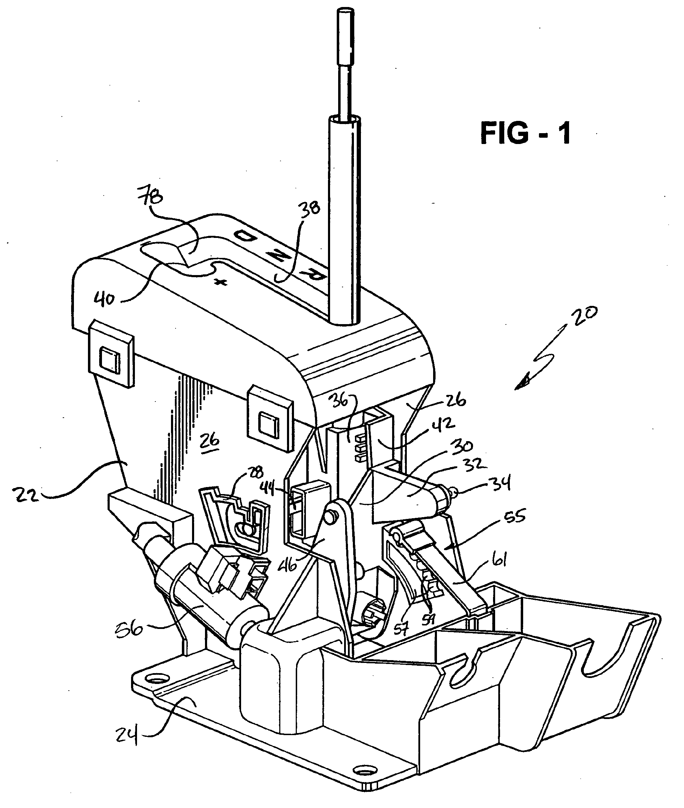

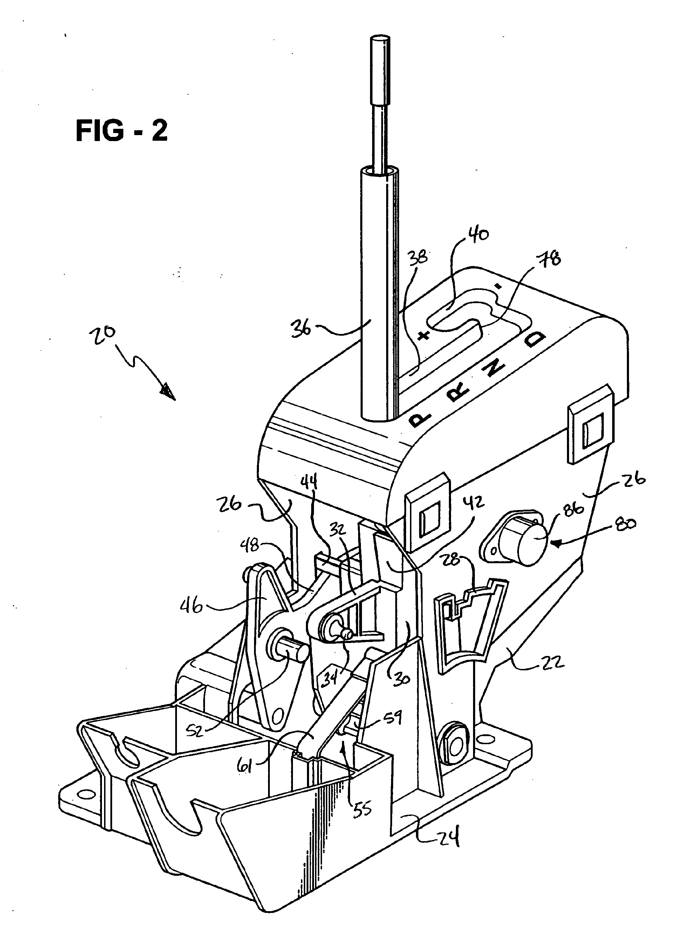

Referring to the Figures, wherein like numerals indicate like or corresponding parts throughout the several views, a shifter assembly is generally shown at 20 in Figures 1 and 2. The shifter assembly 20 is illustrated as a floor type shifter assembly for shifting a vehicle transmission (not shown). The shifter assembly 20 includes a base 22 having a bottom 24 and a pair of upstanding walls 26. Each of the upstanding walls 26 includes an opening defining a series of detents 28. A decorative cover 30 is preferably mounted to the upstanding walls 26 of the base 22 for concealing the working components of the shifter assembly 20. The cover may be of any suitable design and preferably includes a number of indicia, such as "P", for park, "R", for reverse, "N", for neutral, "D", for drive, "+", for upshifting, and "-", for downshifting. Of course, any suitable indicia may be used as desired. The detents of the base 22 define the park, reverse, neutral, and drive positions for the shifter assembly 20.

Referring now to Figures 1, 2, and 3, the shifter assembly 20 further includes a transmission control member 30 movably connected to the base 22. The control member 30 is adapted for connection to a linkage (not shown) for operating the vehicle transmission. In particular, the control member 30 includes an arm 32 having a connector 34 with the connector 34 coupling the linkage to the arm 32.

The shifter assembly 20 also includes a shift lever 36 pivotally connected to the base 22 for movement within a first path 38 and a second path 40. In particular, the shift lever 36 moves within the first path 38 through the series of positions, which include the park, reverse, neutral, and drive positions, to define an automatic shift mode. Preferably, the shift lever 36 is coupled to the control member 30 for concurrent movement therewith when the shift lever 36 moves within the first path 38. In particular, the control member 30 includes a pocket 42 for receiving and partially encapsulating the shift lever 36 to define the coupling of the shift lever 36 to the control member 30 when the shift lever 36 moves within the first path 38. The shift lever 36 includes a pawl 44 engaging the detents 28 as the shift lever 36 moves within the first path 38. Hence, the detents 28 define the park, reverse, neutral, and drive positions for the shift lever 36. This type of pawl 44 and detent arrangement is well known in the art and will not be discussed in any greater detail.

Although not specifically illustrated in Figures 1-3, the shift lever 36 moves upwardly and downwardly within the second path 40 for controlling an upshift and downshift, respectively, of the vehicle transmission and to define a manual shift mode. As discussed in greater detail below, the shift lever 36 is uncoupled from the control member 30 for independent movement relative to the control member 30 when the shift lever 36 moves within the second path 40.

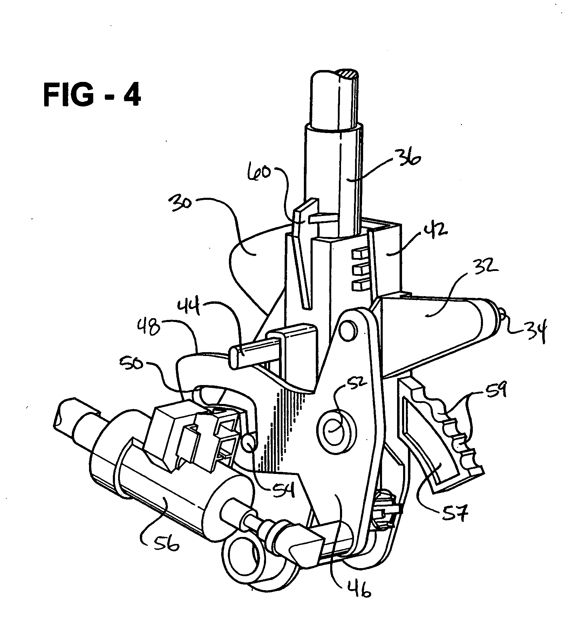

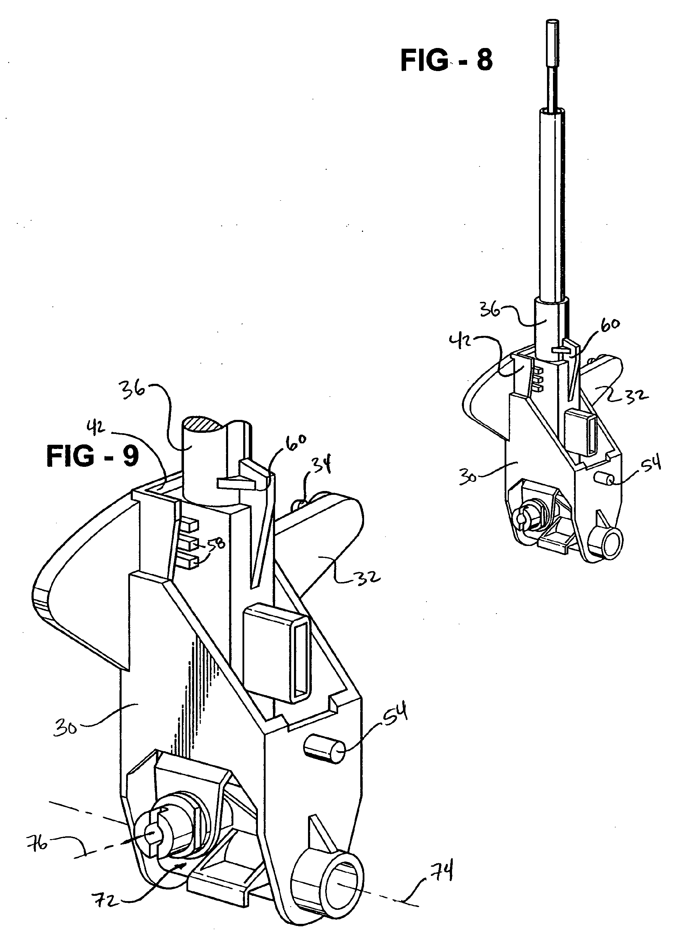

Turning to Figures 1 - 7, the shifter assembly 20 further includes a lockout mechanism 46 selectively engaging the pawl 44 of the shift lever 36. In particular, the lockout mechanism 46 includes a cam surface 48 for selectively engaging the pawl 44. The lockout mechanism 46 defines a substantially L-shaped slot 50 (see Figure 4) and pivots about a pivot pin 52. A guide 54 extends from the control member 30 (best shown in Figures 8 and 9) and rides within the slot 62 during relative movement between the lockout mechanism 46 and the coupled shift lever/control member. An actuator 56 is connected to the lockout mechanism 46 to facilitate the necessary pivotal movement of the cam surface 48. This type of lockout mechanism 46 is used to provide a brake-shift-interlock for the shifter assembly 20. In other words, the lockout mechanism 46 retains the shift lever 36 in the park position until a predetermined condition occurs. Typically, the predetermined condition is turning a key to an ignition position and pressing on a brake pedal. This safety measure ensures that the shift lever 36 will not inadvertently move out of the park position.

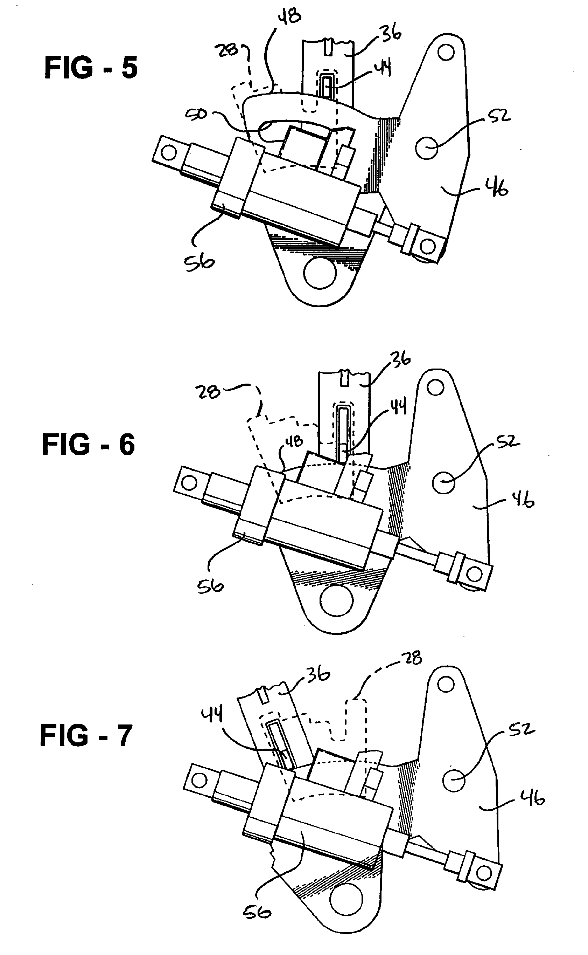

Figures 1 - 5 illustrate the shift lever 36 coupled to the control member 30 and in the park position. The cam surface 48 engages the pawl 44 to retain the pawl 44 in the park position of the detents 28 which defines a locked position for the lockout mechanism 46. This locked position prevents the shift lever 36 from moving out of the park position until the predetermined condition occurs. Figure 6 illustrates the lockout mechanism 46 in an unlocked position with the shift lever 36 remaining in the park position. In particular, the actuator 56 is activated which pivots the lockout mechanism 46 and cam surface 48 downwardly. Simultaneously, the guide 54 slides within the slot 62 and rests at a bend in the slot 62. As shown in Figure 7, the shift lever 36 can be moved to any of the selected positions, such as one of the drive positions. During this movement, the guide 54 will slide within the slot 62. The lockout mechanism 46 remains in the unlocked position as the shift lever 36 moves through the selected positions. The general operation of the lockout mechanism 46 is well known in the art and will not be discussed in any greater detail.

As best shown in Figures 1 - 4 and 10, the shifter assembly 20 further includes a resistance mechanism 55. The resistance mechanism 55 includes an outwardly projecting plate 57 having a series of undulations 59. The undulations 59 correspond to the park, reverse, neutral and drive positions for the shift lever 36. The resistance mechanism 55 further includes a spring biased tactile member 61 which selectively engages the undulations 59 as the shift lever 36 moves between the various positions. The resistance mechanism 55 provides the desired feel for the user during the shifting of the shift lever 36 and assists in locating the desired position of the shift lever 36.

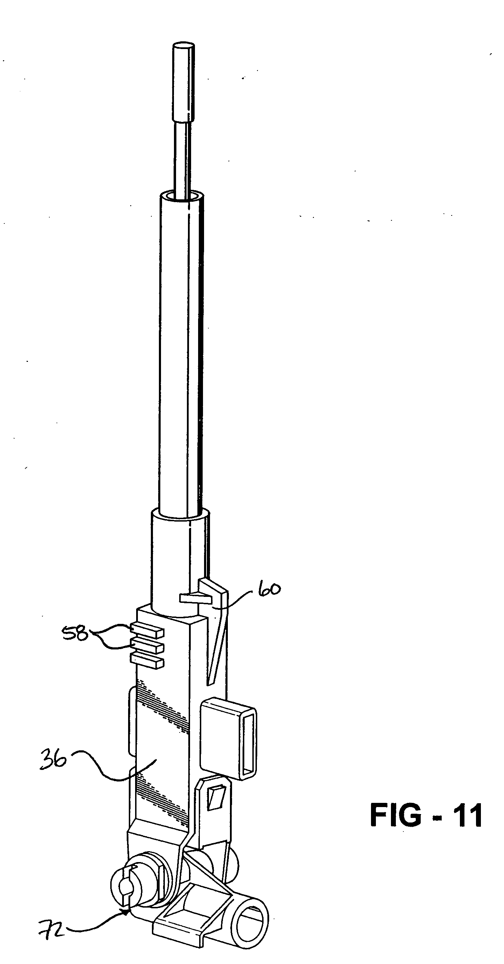

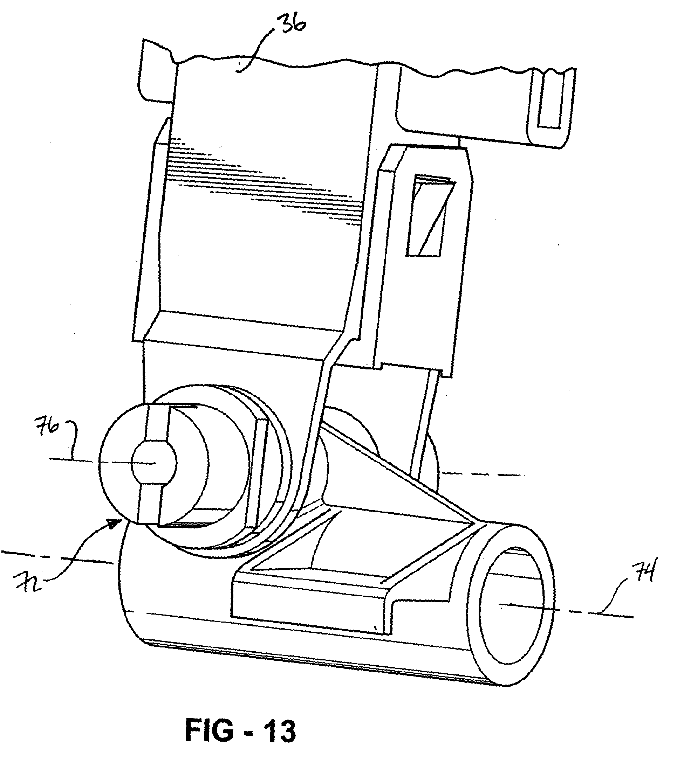

Referring to Figures 8 - 13, the shift lever 36 and control member 30 will be described in greater detail. The pocket 42 of the control member 30 is shown best in Figures 8 and 9. As best shown in Figures 11 and 12, the shift lever 36 includes a plurality of ribs 58 extending from the sides thereof for engagement within the pocket 42. The shift lever 36 also includes a tab 60 projecting outwardly therefrom. The purpose of the tab 60 will be discussed in greater detail below.

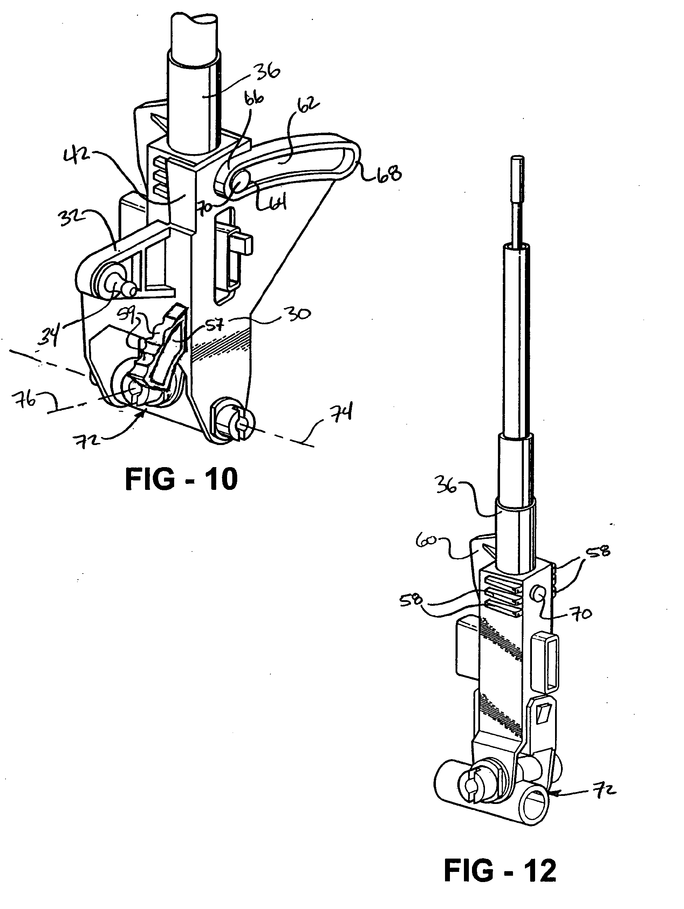

The opposite side of the shift lever 36 and control member 30 are best shown in Figure 10. The control member 30 includes a recessed slot 62 with an aperture 64 defined within the slot 62. The slot 62 includes first 66 and second 68 ends with the aperture 64 being positioned at the first end 66 within the slot 62. Preferably, the slot 62 has an arcuate configuration corresponding to the pivotal movement of the shift lever 36. The arm 32 extends in an opposite direction from the slot 62 and, as discussed above, is adapted to connect to the linkage. As also shown in Figure 12, the shift lever 36 includes a button 70 projecting outwardly toward the control member 30. The button 70 engages the aperture 64 within the control member 30 when the shift lever 36 is coupled to the control member 30 and moving within the first path 38.

As best shown in Figure 13, the shift lever 36 includes a pivot mechanism 72 having a first pivot axis 74 for allowing the shift lever 36 to pivotally move within the first 38 and second 40 paths. The pivot mechanism 72 also has a second pivot axis 76 transverse to the first pivot axis 74 for allowing the shift lever 36 to pivotally move between the first 38 and second 40 paths. In particular, the shift lever 36 moves within the first path 38 about the first pivot axis 74 through the series of positions, which include the park, reverse, neutral, and drive positions, to define the automatic shift mode. The shift lever 36 can then pivot about the second pivot axis 76 to move from the first path 38, through a transverse path 78, shown in Figures 1 and 2, and into the second path 40 when in the drive position. The shift lever 36 moves upwardly and downwardly within the second path 40 about the first pivot axis 74 for controlling the upshift and downshift, respectively, of the vehicle transmission to define the manual shift mode.

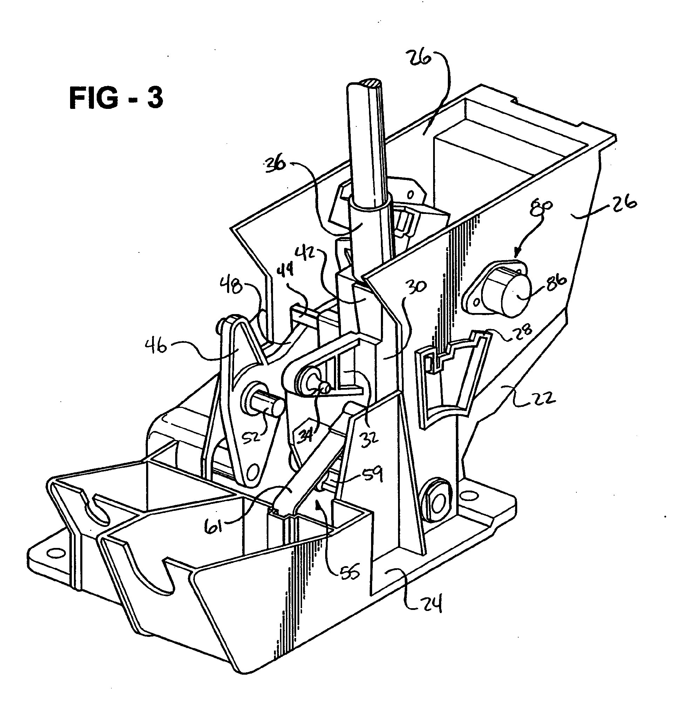

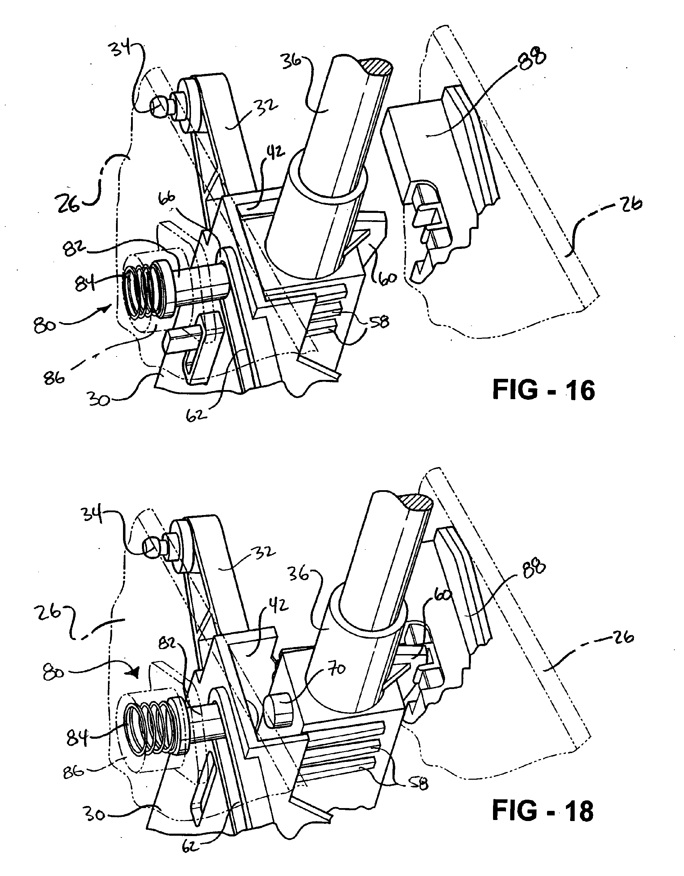

Turning to Figures 2, 3, and 14-18, the shifter assembly 20 is characterized by a locking device 80 mounted to the base 22 for selectively engaging the control member 30. Preferably, the locking device 80 includes a pin 82 continuously biased into engagement with the control member 30. The pin 82 has a post portion and a flange portion. As best shown in Figures 16 and 18, the locking device 80 further includes a spring 84 abutting the pin 82 for providing the continuous bias. In addition, the locking device 80 includes a housing 86, best shown in Figures 2 and 3, mounted to the base 22 with the housing 86 encapsulating the spring 84 and a portion of the pin 82. Specifically, the spring 84 is disposed between an inner wall of the housing 86 and the flange portion of the pin 82. The flange portion may also include a seat for supporting the spring 84. It should be appreciated that the configuration of the pin 82 is but one preferred embodiment and the locking device 80 may include any other suitable device for engaging the control member 30.

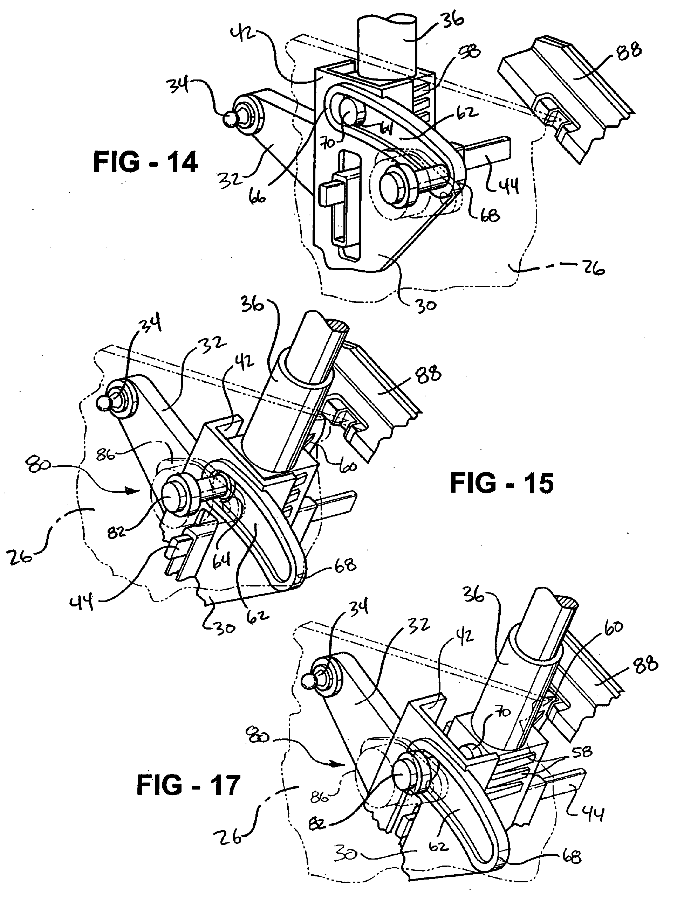

As shown in Figure 14, the shift lever 36 is disposed in the first path 38 in the park position and the pin 82 is disposed at the second end 68 of the slot 62. The shift lever 36 and control member 30 can move from the park position into any of the other reverse, neutral, or drive positions. Figures 15 and 16 illustrate the shift lever 36 and control member 30 in the first path 38 and in the drive position. During the concurrent movement of the shift lever 36 and control member 30, the locking device 80 remains stationary. In particular, the pin 82 slides within the slot 62 between the ends when the shift lever 36 moves through the positions within the first path 38. As shown in Figures 15 and 16, the button 70 of the shift lever 36 aligns with the pin 82 of the locking device 80 when the shift lever 36 is in the drive position.

As shown in Figures 17 and 18, the pin 82 engages the aperture 64 when the shift lever 36 moves from the first path 38 into the second path 40 such that the pin 82 immobilizes the control member 30. Hence, the locking device 80 moves into engagement with the control member 30 to couple the control member 30 to the base 22 when the shift lever 36 is in the second path 40. This coupling engagement prevents relative movement of the control member 30 and inadvertent shifting of the vehicle transmission as the shift lever 36 moves within the second path 40. Preferably, the spring 84 expands and automatically moves the pin 82 into full engagement with the aperture 64 when the shift lever 36 moves out of the pocket 42 of the control member 30. In particular, the button 70 moves out of the aperture 64 and the pin 82 simultaneously moves into the aperture 64. As shown in Figure 18, the pin 82 extends entirely through the aperture 64 and into the pocket 42.

As also shown in Figures 14 - 18, an electronic switch mechanism 88 is mounted to the base 22. The electronic switch mechanism 88 is engageable by the shift lever 36 as the shift lever 36 moves upwardly and downwardly within the second path 40, see Figures 17 and 18. Preferably, the tab 60 of the shift lever 36 engages the electronic switch mechanism 88 when the shift lever 36 is in the second path 40. The electronic switch mechanism 88 may be of any suitable design or configuration as known to those skilled in the art.

Obviously, many modifications and variations of the present invention are possible in light of the above teachings. The invention may be practiced otherwise than as specifically described within the scope of the appended claims, wherein the reference numerals in the claims are merely for convenience and are not to be read in any way as limiting.

## Claims

1. A shifter assembly (20) for shifting a vehicle transmission, said assembly comprising:
a base (22);
a transmission control member (30) movably connected to said base (22) and adapted for connection to a linkage for operating the vehicle transmission; and
a shift lever (36) pivotally connected to said base (22) for movement within a first path (38) and a second path (40), said shift lever (36) coupled to said control member (30) for concurrent movement therewith when said shift lever (36) moves within said first path (38), and said shift lever (36) uncoupled from said control member (30) for independent movement relative to said control member (30) when said shift lever (36) moves within said second path (40);
said shifter assembly (20) **characterized by** a locking device (80) mounted to said base (22) for selectively engaging said control member (30), said locking device (80) remaining stationary during said concurrent movement of said control member (30) and said shift lever (36) and moving into engagement with said control member (30) to couple said control member (30) to said base (22) when said shift lever (36) is in said second path (40), thereby preventing relative movement of said control member (30) and inadvertent shifting of the vehicle transmission as said shift lever (36) moves within said second path (40).

2. An assembly as set forth in claim 1 wherein said locking device (80) includes a pin (82) continuously biased into engagement with said control member (30).

3. An assembly as set forth in claim 2 wherein said locking device (80) further includes a spring (84) abutting said pin (82) for providing said continuous bias.

4. An assembly as set forth in claim 3 wherein said locking device (80) further includes a housing (86) mounted to said base (22) with said housing (86) encapsulating said spring (84) and a portion of said pin (82).

5. An assembly as set forth in claim 2 wherein said control member (30) defines an aperture (64) with said pin (82) engaging said aperture (64) when said shift lever (36) moves within said second path (40) such that said pin (82) immobilizes said control member (30).

6. An assembly as set forth in claim 5 wherein said control member (30) includes a recessed slot (62) with said pin (82) sliding within said slot (62) when said shift lever (36) moves within said first path (38).

7. An assembly as set forth in claim 6 wherein said slot (62) includes first (66) and second (68) ends with said aperture (64) being positioned at said first end (66) within said slot (62).

8. An assembly as set forth in claim 6 wherein said slot (62) has an arcuate configuration corresponding to said pivotal movement of said shift lever (36).

9. An assembly as set forth in claim 6 wherein said control member (30) further includes an arm (32) extending in an opposite direction from said slot (62) and adapted to connect to the linkage.

10. An assembly as set forth in claim 5 wherein said shift lever (36) includes a button (70) projecting outwardly toward said control member (30) with said button (70) engaging said aperture (64) within said control member (30) when said shift lever (36) moves within said first path (38).

11. An assembly as set forth in claim 10 wherein said shift lever (36) moves within said first path (38) through a series of positions including park, reverse, neutral, and drive positions to define an automatic shift mode.

12. An assembly as set forth in claim 11 wherein said button (70) of said shift lever (36) is aligned with said pin (82) of said locking device (80) when said shift lever (36) is in said drive position.

13. An assembly as set forth in claim 1 wherein said control member (30) further includes a pocket (42) for receiving and partially encapsulating said shift lever (36) to define said coupling of said shift lever (36) to said control member (30) when said shift lever (36) moves within said first path (38).

14. An assembly as set forth in claim 1 wherein said shift lever (36) includes a pivot mechanism (72) having a first pivot axis (74) for allowing said shift lever (36) to pivotally move within said first (38) and second (40) paths, and a second pivot axis (76) transverse to said first pivot axis (74) for allowing said shift lever (36) to pivotally move between said first (38) and second (40) paths.

15. An assembly as set forth in claim 14 wherein said shift lever (36) moves within said first path (38) about said first pivot axis (74) through a series of positions including park, reverse, neutral, and drive positions to define an automatic shift mode.

16. An assembly as set forth in claim 15 wherein said shift lever (36) pivots about said second pivot axis (76) to move from said first path (38), through a transverse path (78), and into said second path (40) when in said drive position.

17. An assembly as set forth in claim 16 wherein said shift lever (36) moves upwardly and downwardly within said second path (40) about said first pivot axis (74) for controlling an upshift and downshift, respectively, of the vehicle transmission to define a manual shift mode.

18. An assembly as set forth in claim 17 further including an electronic switch mechanism (88) mounted to said base (22) and engageable by said shift lever (36) as said shift lever (36) moves upwardly and downwardly within said second path (40).

19. An assembly as set forth in claim 18 wherein said shift lever (36) further includes a tab 60 projecting outwardly therefrom for engaging said electronic switch mechanism (88) when said shift lever (36) is in said second path (40).

20. An assembly as set forth in claim 1 wherein said base (22) defines a series of detents (28) and wherein said shift lever (36) includes a pawl (44) engaging said detents (28) as said shift lever (36) moves within said first path (38).

21. An assembly as set forth in claim (20) wherein said detents (28) define park, reverse, neutral, and drive positions for said shift lever (36).

22. An assembly as set forth in claim 21 further including a lockout mechanism (46) selectively engaging said pawl (44) when said pawl (44) is in said park position of said detents (28) to prevent said shift lever (36) from moving out of said park position until a predetermined condition occurs.
